# EUROPEAN PATENT SPECIFICATION

(11) **EP 4 169 708 B1**
(45) Date of publication and mention of the grant of the patent: **21.10.2026**
(21) Application number: 22215003.9
(22) Date of filing: 26.11.2019
(51) Int. Cl.: B32B 17/06, B32B 17/10, B32B 27/08, B32B 7/022, B32B 7/027

(54) **LAMINATED PANES AND WINDOWS FORMED THEREWITH**
VERBUNDSCHEIBEN UND DAMIT HERGESTELLTE FENSTER
PANNEAUX STRATIFIÉS ET FENÊTRES FORMÉES AVEC CEUX-CI

(30) Priority: 29.11.2018 US 201862772733 P
(43) Date of publication of application: 26.04.2023
(62) Document number(s) of the earlier application(s) in accordance with Art. 76 EPC: 19827912.7 / 3 887 149
(73) Proprietor: Corning Incorporated, Corning, New York 14831 (US)
(72) Inventor: COUILLARD, James Gregory, Ithaca, 14850 (US); MCDONALD, Michael Aaron, Painted Post, 14870 (US); RICKERL, Paul George, Endicott, 13760-7709 (US)
(74) Representative: Epping - Hermann - Fischer

(56) References cited:
- WO-A1-2013/181484
- WO-A1-2014/035942
- WO-A1-2016/081422
- US-A- 5 227 241
- US-A1- 2008 268 270
- US-A1- 2010 258 183
- US-A1- 2015 111 016
- US-A1- 2017 182 739

## Description

### CROSS-REFERENCE TO RELATED APPLICATIONS

This application claims the benefit of priority under 35 U.S.C. § 119 of U.S. Provisional Application No. 62/772,733, filed November 29, 2018.

### FIELD OF THE DISCLOSURE

The disclosure relates generally to laminated panes having at least one thin glass layer and a polymer interlayer, wherein the interlayer includes at least two different polymers having widely differing elastic moduli. The disclosure also generally relates to windows employing one or more described laminated panes, such as for increased security or particularly for combined impact and pressure cycling resistance (e.g., for the use in hurricane windows).

### BACKGROUND

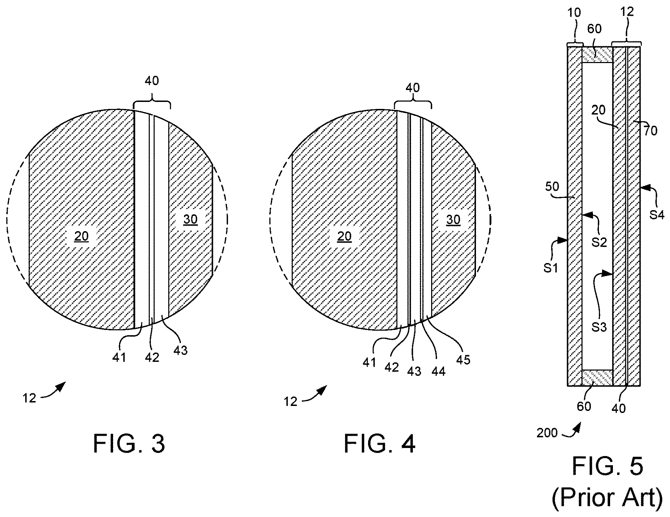

So-called hurricane windows typically employ reinforced frame and spacer components as well as an inner laminated pane comprising two sheets of glass and a polymer interlayer having a high elastic modulus (or a high elastic modulus under sufficiently fast deformation). FIG. 5 (Prior Art) shows an example of such a window **200,** intended as a hurricane window (or an IGU (insulated glass unit) **200** for such a window).

As seen in FIG. 5, the window **200** includes an outer pane **10** and an inner laminated pane **12.** The outer pane **10** is typically in the form of a single sheet **50** of glass, surfaces of the sheet **50** correspond to an outer or first surface S1 and a second surface S2 (interior) of the window **200.** The laminated pane **12** comprises a first sheet **20** of glass and a second sheet **70** of glass with a polymer interlayer **40** adhered between the first sheet **20** and the second sheet **70.** The polymer interlayer has a high elastic modulus (or a high elastic modulus under sufficiently fast deformation), such as, for example, within the range of about 300 to 1000 MPa, or alternatively about 400 to 600 MPa when measured at an elongation rate of 10 mm per minute at 30° C. The polymer interlayer has a high elastic modulus (or a high elastic modulus under sufficiently fast deformation), such as, for example, within the range of about 1 to about 300 MPa, or alternatively about 2 to about 100 MPa when measured at an elongation rate of 10 mm per minute at 30 °C. An inner-facing surface of first sheet **20** and an outer facing surface of second sheet **70** correspond to a third surface S3 (interior) and an inner or fourth surface S4 (dwelling-facing) of the window **200.** Reinforced spacers **60** and a reinforced frame (not shown) are also employed.

During a hurricane, if a wind-driven projectile strikes surface S1 with sufficient force, then sheet **50,** first sheet **20,** and second sheet **70** can all be broken by the impact, but if the window **200** operates as intended, the polymer interlayer **40** remains intact and remains sealed within the window frame, preventing wind and wind-borne water from passing through the window **200** and entering the dwelling even after sheet **50,** first sheet **20,** and second sheet **70** are broken. To enable the polymer interlayer **40** to survive such an impact, the first sheet **20** and the second sheet **70** of the laminated pane **12** are heat strengthened, meaning they are thermally tempered to produce a surface compression generally in the range of from about 24 to about 52 MPa (about 3,500 to about 7,500 psi). (The sheet **50** is also generally heat strengthened.)

Conventionally, if the first sheet **20** and the second sheet **70** are not thermally strengthened, they tend to break upon impact and form large, sharp-edged fragments that can tear, puncture or otherwise damage the interlayer **40,** causing it to fail to maintain the desired seal. If the first sheet **20** and the second sheet **70** are provided with too much surface compression, they can break like safety glass into small pieces which tend to dislodge from the frame, weakening the grip of the frame on the polymer interlayer **40,** such that post-impact pressure cycling caused by storm winds can separate the polymer interlayer **40** from the spacers **60** and the frame (not shown). Thus, there is a certain range of thermal strengthening which is applied to the first sheet **20** and the second sheet **70.** Too little, or too much and the window seal will fail under impact alone, or under impact followed by pressure cycling.

Currently, each sheet of the hurricane resistant window **200** requires some thermal strengthening. It would be desirable to provide a hurricane resistant window having lower manufacturing process costs, such as by avoiding unneeded thermal strengthening, while still preserving or even improving other window properties.

US2017/182739A1 discloses in one example a laminated pane comprising: a first sheet of soda lime glass, the first sheet having a thickness of 6 mm; a second sheet of Corning Eagle XG glass, the second sheet having a thickness of 0.7 mm; and a polymer interlayer between the first sheet and the second sheet adhered between the first sheet and the second sheet, the polymer interlayer comprising a polymer material; wherein the coefficient of thermal expansion of the first sheet CTE1 is greater than the coefficient of thermal expansion of the second sheet CTE2.

### SUMMARY

A first aspect of the present disclosure provides a window comprising: an outer pane comprising a single sheet of glass; and an inner pane comprising a laminate pane, the laminate pane comprising: a first sheet of a first transparent or translucent material, the first sheet having a first thickness and the first transparent or translucent material having a first coefficient of thermal expansion (CTE1) measured over a range of from 0 to about 300 °C; a second sheet of transparent or translucent material, the second sheet having a second thickness and the second transparent or translucent material having a second coefficient of thermal expansion (CTE2); and a polymer interlayer between the first sheet and the second sheet adhered between the first sheet and the second sheet, the polymer interlayer comprising a first polymer layer of a first polymer material, the first polymer material having a first elastic modulus, and a second polymer layer of a second polymer material, the second polymer material having a second elastic modulus; wherein CTE1 is greater than CTE2 , the second thickness is in the range from about 1 to about 0.3 mm, the second transparent or translucent material is an inorganic glass, and the first elastic modulus is more than about 20 times greater than the second elastic modulus; and a reinforced spacer positioned between the outer pane and the inner pane.

According to another aspect of the present disclosure, the first transparent or translucent material is an organic polymer material. Alternatively according to yet another aspect, the first transparent or translucent material is a soda lime silicate glass.

According to still another aspect, alone or in combination with any of the previous aspects, the second CTE is less than about 50 x 10⁻⁷/°C and greater than zero. According to still another aspect, also in combination with any of the previous aspects, the second CTE is less than about 35 x 10⁻⁷/°C and greater than zero.

According to still another aspect, alone or in combination with any of the previous aspects, the second transparent or translucent material is a boro-aluminosilicate glass. Alternatively, according to yet another aspect, in combination with any of the previous aspects, the second transparent or translucent material is an alkaline earth boro-aluminosilicate glass or an alkali-free boro-aluminosilicate glass.

According to still another aspect, alone or in combination with any of the previous aspects, the second thickness is in the range from about 0.85 to about 0.4 mm. Alternatively according to yet another aspect in combination with any of the previous aspects, the second thickness is in the range from about 0.8 to about 0.45 mm.

According to still another aspect, alone or in combination with any of the previous aspects, the first elastic modulus is in the range of from about 300 to about 1000 MPa when measured at an elongation rate of 10 mm per minute at 30 °C. Alternatively, according to yet another aspect in combination with any of the previous aspects, the first elastic modulus is in the range of from about 400 to about 600 MPa when measured at an elongation rate of 10 mm per minute and at 30 °C. Alternatively according to yet another aspect in combination with any of the previous aspects, the first elastic modulus is in the range of from about 1 to about 300 MPa when measured at an elongation rate of 10 mm per minute and at 30 °C, or alternatively about 2 to about 100 MPa when measured at an elongation rate of 10 mm per minute and at 30 °C.

According to still another aspect, alone or in combination with any of the previous aspects, the second elastic modulus is less than about one thirtieth, alternatively about one fortieth, alternatively about one fiftieth, or even less than about one one-hundredth of the first elastic modulus, when measured at an elongation rate of 10 mm per minute at 30 °C.

According to still another aspect, alone or in combination with any of the previous aspects, the polymer interlayer further comprises a third polymer layer of the first polymer material.

As will be explained in more detail below, these aspects of the present disclosure, alone or in their various combinations, can provide a hurricane resistant window or a hurricane resistant pane of a hurricane resistant window, which does not require heat strengthening in the second sheet of the laminated pane and which can employ a low CTE glass sheet as the second sheet of the laminated pane without excessive distortion of the laminated pane.

Additional features and advantages of the disclosure will be set forth in the detailed description which follows, and in part will be readily apparent to those skilled in the art from that description or recognized by practicing the methods as described herein, including the detailed description which follows, the claims, as well as the appended drawings.

It is to be understood that both the foregoing general description and the following detailed description present various embodiments of the disclosure, and are intended to provide an overview or framework for understanding the nature and character of the claims. The accompanying drawings are included to provide a further understanding of the disclosure, and are incorporated into and constitute a part of this specification. The drawings illustrate various embodiments of the disclosure and, together with the description, serve to explain the principles and operations of the disclosure.

### BRIEF DESCRIPTION OF THE DRAWINGS

The following detailed description can be further understood when read in conjunction with the following drawings in which:
**FIG. 1** is a cross-sectional view of a laminated pane according to aspects of the present disclosure;
**FIG. 2** is a cross-sectional view of a window or IGU according to aspects of the present disclosure;
**FIG. 3 and FIG. 4** are close-up cross section views of various aspects of laminated panes according to the present disclosure;
**FIG. 5** **(Prior Art)** is a cross-sectional elevational representation of a prior art hurricane-resistant window.

### DETAILED DESCRIPTION

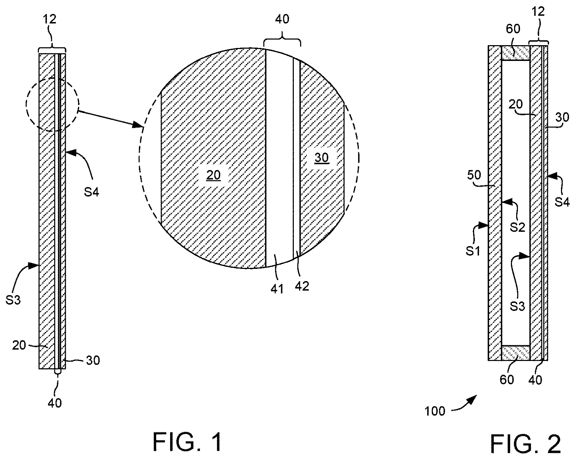

Various aspects of the disclosure will now be discussed with reference to **FIGS. 1-4****,** which illustrate aspects of laminated panes, and windows employing such panes and their components, features, or properties. The following general description is intended to provide an overview of the claimed devices, and various aspects will be more specifically discussed throughout the disclosure with reference to the non-limiting depicted aspects, these aspects generally being interchangeable with one another within the context of the disclosure.

With reference to FIG. 1, disclosed herein is a laminated pane **12** which includes a first sheet **20** of a first transparent or translucent material, the first sheet **20** having a first thickness, and the first transparent or translucent material having a first coefficient of thermal expansion measured over a range of from 0 to about 300 °C (a "CTE"). The laminate pane **12** further includes a second sheet **30,** of a second transparent or translucent material, the second sheet **30** having a second thickness, and the second transparent or translucent material having a second CTE.

The laminated pane **12** further includes a polymer interlayer **40** between the first sheet **20** and the second sheet **30** an adhered between the first sheet **20** and the second sheet **30.** The polymer interlayer **40,** as seen in the magnified inset (or "close-up" cross-sectional view) includes a first polymer layer **41** of a first polymer material, the first polymer material having a first elastic modulus, and a second polymer layer **42,** of a second polymer material, the second polymer material having a second elastic modulus.

With respect to the laminated pane **12,** the first CTE (of the first sheet **20)** is greater than the second CTE (of the second sheet **30),** the second thickness (the thickness of the second sheet **30)** is in the range of from about 1 to about 0.3 mm, the second transparent or translucent material is an inorganic glass, and the first elastic modulus (the modulus of the polymer of the first polymer layer **41)** is in excess of about 20 times greater than, e.g. in excess of about 100 times greater than, the second elastic modulus (the modulus of the polymer of the second polymer layer **42).**

The laminated pane **12** constitutes a hurricane resistant pane for use in a hurricane resistant window having one sheet (the second sheet **30** of the laminated pane **40)** which does not require heat strengthening in order to pass impact plus pressure cycling tests required to show hurricane resistance. Without wishing to be bound by theory, this is believed to be due to the breakage patterns of the thin glass sheet (second sheet **30),** which patterns do not result in damage to the polymer interlayer **40** or to the seal of the polymer interlayer **40** with the spacers **60** and window frame (not shown) under impact plus pressure cycling testing. Accordingly, no thermal strengthening is required for second sheet **30,** reducing at least one item of processing cost.

Further, the laminate pane **12** employs (and is able to employ) a low CTE glass sheet as second sheet **30** of the laminated pane without excessive distortion of the laminated pane. Again without being bound by any particular theory, this is believed to be due to the presence of second polymer layer **42** and the significantly lower elastic modulus of the second polymer layer **42,** which is able to relieve stress produced during lamination when cooling down from the temperatures used to cure the polymer interlayer **40,** due to the difference in CTE between the first sheet **20** and the second sheet 30. The ability to employ a low CTE glass sheet is important because high quality thin glass is commercially available in larger sheets primarily (when considering cost economies) or even exclusively (at largest sizes) in low CTE glass compositions. Further, the ability to relieve stress resulting from the different CTE values allows laminated pane **42** to be produced without excessive bow.

According to at least one aspect of this disclosure, the first transparent or translucent material (the material of the first sheet **20)** is an organic polymer material. Alternatively, according to another presently preferred aspect, the first transparent or translucent material the material of the first sheet **20)** is a soda lime silicate glass.

According to still another aspect, alone or in combination with any of the previous aspects, the second CTE (the CTE of the material of the second sheet **30)** is less than about 50 x 10⁻⁷/°C and greater than zero. According to still another aspect also combination with any of the previous aspects, the second CTE is less than about 35 x 10⁻⁷/°C and greater than zero.

According to still another aspect, alone or in combination with any of the previous aspects, the second transparent or translucent material (the material of the second sheet **30)** is a boro-aluminosilicate glass. Alternatively, according to yet another aspect, alone or in combination with any of the previous aspects, the second transparent or translucent material is an alkaline earth boro-aluminosilicate glass or an alkali-free boro-aluminosilicate glass. Exemplary commercial glass products include, but are not limited to, Corning^{®} EAGLE XG^{®} and Lotus^{™} NXT glasses. In some embodiments, the second sheet can be produced by float or fusion draw manufacturing processes. Soda lime glass has a CTE of approximately 90 x 10⁻⁷/°C. By comparison, Corning EAGLE XG glass has a CTE of approximately 31.7 x 10⁻⁷/°C, which is approximately 1/3 ("one-third") of the CTE of soda lime glass.

According to still another aspect of the present disclosure, in alone or combination with any of the previous aspects, the second thickness (the thickness of the second sheet **30)** is in the range from about 0.85 to about 0.4 mm. Alternatively according to yet another aspect in combination with any of the previous aspects, the second thickness is in the range from about 0.8 to about 0.45 mm. According to still another aspect, the first thickness (the thickness of the first sheet **20)** may be in the range of from about 2 to about 20 mm, or alternatively from about 3 to about 12 mm, or alternatively from about 3 to about 6 mm.

According to still another aspect, in combination with any of the previous aspects, the first elastic modulus (the modulus of the polymer of the first polymer layer **41)** is in the range of from about 300 to about 1000 MPa when measured at an elongation rate of 10mm per minute at 30° C. Alternatively, according to yet another aspect in combination with any of the previous aspects, the first elastic modulus is in the range of from about 400 to about 600 MPa when measured at an elongation rate of 10 mm per minute and at 30° C. According to still another aspect, in combination with any of the previous aspects, the first elastic modulus (the modulus of the polymer of the first polymer layer **41)** is in the range of from about 1 to about 300 MPa when measured at an elongation rate of 10 mm per minute at 30° C. Alternatively, according to yet another aspect in combination with any of the previous aspects, the first elastic modulus is in the range of from about 2 to about 100 MPa when measured at an elongation rate of 10 mm per minute and at 30° C. The first polymer may be selected from interlayer polymers typically used for hurricane resistant or intrusion-resistant windows, such as, for example, SentryGlas^{®} available from DuPont or from various distributors.

According to still another aspect, in combination with any of the previous aspects, the second elastic modulus (the modulus of the polymer of the second polymer layer **42)** is less than about one thirtieth, alternatively about one fortieth, alternatively about one fiftieth, or alternatively even about one one-hundredth of the first elastic modulus, when measured at an elongation rate of 10 mm per minute at 30° C. The second polymer may be selected from various low-elastic-modulus polymers, such as, for example, thermoplastic urethanes.

As another aspect of the present disclosure, FIG. 2 shows a cross section of a window **100** having a laminated pane **12** as described with respect to FIG. 1.

According to still another aspect, as shown in the close-up cross section of FIG. 3, the polymer interlayer **40** can further include a third polymer layer **43** of the first polymer material, particularly since it is common to use multiple layers of high-modulus polymer in order to improve the damage resistance of the polymer interlayer **40.** According to still another aspect, as shown in the close-up cross section of FIG. 4, the polymer interlayer **40** can further include a fourth polymer layer **44** of the second polymer material, and a fifth polymer layer of the first polymer material, there providing two low-modulus layers (the second and fourth layers) to provide stress relief and prevent excess bow. Of course, the window **100** of FIG. 2 may also use any of the polymer interlayers **40** shown in FIGS. 1, 3, and 4 or other combinations not shown.

In a first example, a laminate was produced according to at least one embodiment of the present application. The laminate had a height of about 989 mm and a width of about 1256 mm. The laminate had a first sheet made up of soda lime glass having a thickness of about 2.1 mm and a second sheet of Corning EAGLE XG glass having a thickness of about 0.7 mm. The two glass sheets had a polymer layer between them made up of multi-layer polyvinyl butyrate (PVB) having a thickness of about 0.81 mm. The polymer layer was made up of two outer layers of PVB having a higher elastic modulus than the inner core layer of PVB. The two outer layers of PVB both had a thickness of about 0.34 mm and the inner layer of PVB has a thickness of about 0.13 mm for a total polymer thickness of about 0.81 mm. The higher elastic modulus PVB was at least about 20 times greater than the lower elastic modulus PVB.

A standard laminate was produced for comparison. The standard laminate had a height of about 989 mm and a width of about 1256 mm. The laminate had a first sheet made up of soda lime glass having a thickness of about 2.1 mm and a second sheet of Corning EAGLE XG glass having a thickness of about 0.7 mm. The two glass sheets had a polymer layer between them made up of standard single layer polyvinyl butyrate (PVB) having a thickness of about 0.76 mm. The polymer layer was made up of PVB having an elastic modulus at least about 20 times greater than the lower elastic modulus PVB. It is noted that the minor difference in thickness between the polymer layers of the two laminates would not be expected to produce a difference in resulting bow.

Both samples were tested for bow according to EN 12150 as follows: the laminate was placed in a vertical position and supported on its longer side by two load bearing blocks at the quarter points. The deformation was then measured along the diagonals as the maximum distance between a straight metal ruler, or a stretched wire, and the concave surface of the glass. The value for the bow is then expressed as absolute value of the deformation, in mm.

The standard laminate produced a bow of approximately 4.52 mm (measured as max-min across diagonal). The laminate according to an embodiment of the present application produced a bow of approximately 2.78 mm (measured as max-min across diagonal). This translates to about a 38% reduction in bow for the present laminates.

In another example, a laminate was produced according to a further embodiment of the present application. The laminate had a height of about 3 feet and a width of about 5 feet. The laminate had a first sheet made up of soda lime glass having a thickness of about 6 mm and a second sheet of Corning EAGLE XG glass having a thickness of about 0.7 mm. The two glass sheets had a polymer layer between them made up of multi-layer polyvinyl butyrate (PVB) having a thickness of about 0.81 mm. The polymer layer was made up of two outer layers of PVB having a higher elastic modulus than the inner core layer of PVB. The two outer layers of PVB both had a thickness of about 0.34 mm and the inner layer of PVB has a thickness of about 0.13 mm for a total polymer thickness of about 0.81 mm. The higher elastic modulus PVB was at least about 20 times greater than the lower elastic modulus PVB.

A standard laminate was produced for comparison. The standard laminate had a height of about 3 feet and a width of about 5 feet. The first laminate had a first sheet made up of soda lime glass having a thickness of about 6 mm and a second sheet of Corning EAGLE XG glass having a thickness of about 0.7 mm. The two glass sheets had a polymer layer between them made up of standard single layer polyvinyl butyrate (PVB) having a thickness of about 0.76 mm. The polymer layer was made up of PVB having an elastic modulus at least about 20 times greater than the lower elastic modulus PVB. It is noted that the minor difference in thickness between the polymer layers of the two laminates would not be expected to produce a difference in resulting bow.

Both samples were tested for bow according to EN 12150 as follows: the laminate was placed in a vertical position and supported on its longer side by two load bearing blocks at the quarter points. The deformation was then measured along the diagonals as the maximum distance between a straight metal ruler, or a stretched wire, and the concave surface of the glass. The value for the bow is then expressed as absolute value of the deformation, in mm.

The standard laminate produced a bow of approximately 5.01 mm (measured as max-min across diagonal). The laminate according to an embodiment of the present application produced a bow of approximately 2.88 mm (measured as max-min across diagonal). This translates to about a 43% reduction in bow for the present laminates.

It will be appreciated that the various disclosed embodiments can involve particular features, elements or steps that are described in connection with that particular embodiment. It will also be appreciated that a particular feature, element or step, although described in relation to one particular embodiment, can be interchanged or combined with alternate embodiments in various non-illustrated combinations or permutations.

It is also to be understood that, as used herein the terms "the," "a," or "an," mean "at least one," and should not be limited to "only one" unless explicitly indicated to the contrary. Thus, for example, reference to "a component" includes examples having one such "component" or two or more such "components" unless the context clearly indicates otherwise. Similarly, a "plurality" or an "array" is intended to denote two or more, such that an "array of components" or a "plurality of components" denotes two or more such components.

Ranges can be expressed herein as from "about" one particular value, and/or to "about" another particular value. When such a range is expressed, examples include from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint.

All numerical values expressed herein are to be interpreted as including "about," whether or not so stated, unless expressly indicated otherwise. It is further understood, however, that each numerical value recited is precisely contemplated as well, regardless of whether it is expressed as "about" that value. Thus, "a dimension less than 100 nm" and "a dimension less than about 100 nm" both include embodiments of "a dimension less than about 100 nm" as well as "a dimension less than 100 nm."

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

While various features, elements or steps of particular embodiments can be disclosed using the transitional phrase "comprising," it is to be understood that alternative embodiments, including those that can be described using the transitional phrases "consisting" or "consisting essentially of," are implied. Thus, for example, implied alternative embodiments to a device comprising A+B+C include embodiments where a device consists of A+B+C, and embodiments where a device consists essentially of A+B+C.

It will be apparent to those skilled in the art that various modifications and variations can be made to the present disclosure without departing from the scope of the claims. The disclosure should be construed to include everything within the scope of the appended claims.

## Claims

1. A window comprising:
an outer pane comprising a single sheet of glass (50); and
an inner pane comprising a laminate pane, the laminate pane comprising:
a first sheet (20) of a first transparent or translucent material, the first sheet (20) having a first thickness and the first transparent or translucent material having a first coefficient of thermal expansion (CTE₁) measured over a range of from 0 to about 300 °C;
a second sheet (30) of a second transparent or translucent material, the second sheet having a second thickness and the second transparent or translucent material having a second coefficient of thermal expansion (CTE₂); and
a polymer interlayer (40) between the first sheet (20) and the second sheet (30) adhered between the first sheet and the second sheet, the polymer interlayer (40) comprising
a first polymer layer (41) of a first polymer material, the first polymer material having a first elastic modulus, and
a second polymer layer (42) of a second polymer material, the second polymer material having a second elastic modulus;
wherein CTE₁ is greater than CTE₂, the second thickness is in the range from about 1 to about 0.3 mm, the second transparent or translucent material is an inorganic glass, and the first elastic modulus is more than about 20 times greater than the second elastic modulus, wherein the elastic moduli are measured at an elongation rate of 10 mm per minute and at 30 °C; and
a reinforced spacer (60) positioned between the outer pane and the inner pane.

2. The window according to claim 1, wherein the first transparent or translucent material is an organic polymer material.

3. The window according to claim 1, wherein the first transparent or translucent material is a soda lime silicate glass.

4. The window according to any of the preceding claims, wherein the second CTE is less than about 50 x 10⁻⁷/°C and greater than zero.

5. The window according to any of the preceding claims, wherein the second CTE is less than about 35 x 10⁻⁷/°C and greater than zero.

6. The window according to any of the preceding claims, wherein the second transparent or translucent material is a boro-aluminosilicate glass.

7. The window according to any of the preceding claims, wherein the second transparent or translucent material is an alkaline earth boro-aluminosilicate glass or an alkali-free boro-aluminosilicate glass.

8. The window according to any of the preceding claims, wherein the second thickness is in the range from about 0.85 to about 0.4 mm.

9. The window according to any of the preceding claims, wherein the first elastic modulus is in the range of from about 300 to about 1000 MPa when measured at an elongation rate of 10 mm per minute and at 30 °C.

10. The window according to any of the preceding claims, wherein the first elastic modulus is in the range of from about 400 to about 600 MPa when measured at an elongation rate of 10 mm per minute and at 30 °C.

11. The window according to any of the preceding claims, wherein the second elastic modulus is less than one thirtieth of the first elastic modulus when measured at an elongation rate of 10 mm per minute and at 30° C.

12. The window according to any of the preceding claims, wherein the second elastic modulus is less than one fortieth of the first elastic modulus when measured at an elongation rate of 10 mm per minute and at 30° C.

13. The window according to any of the preceding claims, wherein the second elastic modulus is less than about one one-hundredth of the first elastic modulus when measured at an elongation rate of 10 mm per minute and at 30 °C.

14. The window according to any of the preceding claims, wherein the polymer interlayer (40) further comprises a third polymer layer (43) of the first polymer material.

15. The window according to any of the preceding claims, wherein the first polymer interlayer (40) is SentryGlas^{®} and the second polymer interlayer (40) is a thermoplastic urethane.

## Patentansprüche

1. Fenster, umfassend:
eine Außenplatte, die eine einzelne Glasscheibe (50) umfasst; und
eine Innenplatte, die eine Verbundglasscheibe umfasst, wobei die Verbundglasscheibe Folgendes umfasst:
eine erste Platte (20) aus einem ersten transparenten oder lichtdurchlässigen Material, wobei die erste Platte (20) eine erste Dicke aufweist und das erste transparente oder lichtdurchlässige Material einen ersten Wärmeausdehnungskoeffizienten (CTE1) aufweist, der über einen Bereich von 0 bis etwa 300 °C gemessen wird;
eine zweite Platte (30) aus einem zweiten transparenten oder lichtdurchlässigen Material, wobei die zweite Platte eine zweite Dicke hat und das zweite transparente oder lichtdurchlässige Material einen zweiten Wärmeausdehnungskoeffizienten (CTE2) aufweist; und
eine Polymer-Zwischenschicht (40) zwischen der ersten Platte (20) und der zweiten Platte (30), die zwischen der ersten Platte und der zweiten Platte haftet, wobei die Polymer-Zwischenschicht (40) Folgendes umfasst
eine erste Polymerschicht (41) aus einem ersten Polymermaterial, wobei das erste Polymermaterial einen ersten Elastizitätsmodul aufweist, und
eine zweite Polymerschicht (42) aus einem zweiten Polymermaterial, wobei das zweite Polymermaterial einen zweiten Elastizitätsmodul aufweist;
wobei der CTE1 größer ist als der CTE2, die zweite Dicke im Bereich von etwa 1 bis etwa 0,3 mm liegt, das zweite transparente oder lichtdurchlässige Material ein anorganisches Glas ist und der erste Elastizitätsmodul mehr als etwa 20 mal größer ist als der zweite Elastizitätsmodul, wobei die Elastizitätsmodule bei einer Dehnungsrate von 10 mm pro Minute und bei 30 °C gemessen werden; und
ein verstärkter Abstandshalter (60), der zwischen der Außenplatte und der Innenplatte angeordnet ist.

2. Fenster nach Anspruch 1, wobei das erste transparente oder lichtdurchlässige Material ein organisches Polymermaterial ist.

3. Fenster nach Anspruch 1, wobei das erste transparente oder lichtdurchlässige Material ein Kalknatronsilikatglas ist.

4. Fenster nach einem der vorhergehenden Ansprüche, wobei der zweite CTE kleiner als etwa 50 × 10⁻⁷/°C und größer als Null ist.

5. Fenster nach einem der vorhergehenden Ansprüche, wobei der zweite CTE kleiner als etwa 35 × 10⁻⁷/°C und größer als Null ist.

6. Fenster nach einem der vorhergehenden Ansprüche, wobei das zweite transparente oder lichtdurchlässige Material ein Bor-Aluminium-Silikatglas ist.

7. Fenster nach einem der vorhergehenden Ansprüche, wobei das zweite transparente oder lichtdurchlässige Material ein Erdalkali-Boraluminosilikatglas oder ein alkalifreies Boraluminosilikatglas ist.

8. Fenster nach einem der vorhergehenden Ansprüche, wobei die zweite Dicke im Bereich von etwa 0,85 bis etwa 0,4 mm liegt.

9. Fenster nach einem der vorhergehenden Ansprüche, wobei der erste Elastizitätsmodul im Bereich von etwa 300 bis etwa 1000 MPa liegt, gemessen bei einer Dehnungsrate von 10 mm pro Minute und bei 30 °C.

10. Fenster nach einem der vorhergehenden Ansprüche, wobei der erste Elastizitätsmodul im Bereich von etwa 400 bis etwa 600 MPa liegt, wenn er bei einer Dehnungsrate von 10 mm pro Minute und bei 30 °C gemessen wird.

11. Fenster nach einem der vorhergehenden Ansprüche, wobei der zweite Elastizitätsmodul weniger als ein Dreißigstel des ersten Elastizitätsmoduls beträgt, gemessen bei einer Dehnungsrate von 10 mm pro Minute und bei 30 °C.

12. Fenster nach einem der vorhergehenden Ansprüche, wobei der zweite Elastizitätsmodul weniger als ein Vierzigstel des ersten Elastizitätsmoduls beträgt, wenn er bei einer Dehnungsrate von 10 mm pro Minute und bei 30 °C gemessen wird.

13. Fenster nach einem der vorhergehenden Ansprüche, wobei der zweite Elastizitätsmodul weniger als etwa ein Hundertstel des ersten Elastizitätsmoduls beträgt, gemessen bei einer Dehnungsrate von 10 mm pro Minute und bei 30 °C.

14. Fenster nach einem der vorhergehenden Ansprüche, wobei die Polymer-Zwischenschicht (40) ferner eine dritte Polymerschicht (43) aus dem ersten Polymermaterial umfasst.

15. Fenster nach einem der vorhergehenden Ansprüche, wobei die erste Polymer-Zwischenschicht (40) SentryGlas^{®} ist und die zweite Polymer-Zwischenschicht (40) ein thermoplastisches Urethan ist.

## Revendications

1. Fenêtre comprenant :
une feuille extérieure comprenant une feuille unique de verre (50) ; et
une feuille intérieure comprenant une vitre laminée, la vitre laminée comprenant :
une première feuille (20) d'un premier matériau transparent ou translucide, la première feuille (20) ayant une première épaisseur et le premier matériau transparent ou translucide ayant un premier coefficient de dilatation thermique (CTE1) mesuré sur une plage allant de 0 à environ 300 °C ;
une seconde feuille (30) d'un second matériau transparent ou translucide, la seconde feuille ayant une seconde épaisseur et le second matériau transparent ou translucide ayant un second coefficient de dilatation thermique (CTE2) ; et
une couche intermédiaire polymère (40) entre la première feuille (20) et la seconde feuille (30), adhérant entre la première feuille et la seconde feuille, la couche intermédiaire polymère (40) comprenant
une première couche polymère (41) d'un premier matériau polymère, le premier matériau polymère ayant un premier module d'élasticité, et
une deuxième couche polymère (42) d'un deuxième matériau polymère, le deuxième matériau polymère ayant un deuxième module d'élasticité ;
sachant que le CTE1 est supérieur au CTE2, la seconde épaisseur est dans la gamme d'environ 1 à environ 0,3 mm, le second matériau transparent ou translucide est un verre inorganique, et le premier module d'élasticité est plus d'environ 20 fois supérieur au deuxième module d'élasticité, les modules d'élasticité étant mesurés à une vitesse d'allongement de 10 mm par minute et à 30 °C ; et
un intercalaire renforcé (60) disposé entre la feuille extérieure et la feuille intérieure.

2. Fenêtre selon la revendication 1, sachant que le premier matériau transparent ou translucide est un matériau polymère organique.

3. Fenêtre selon la revendication 1, sachant que le premier matériau transparent ou translucide est un verre de silicate sodocalcique.

4. Fenêtre selon l'une quelconque des revendications précédentes, sachant que le second CTE est inférieur à environ 50 × 10⁻⁷/°C et supérieur à zéro.

5. Fenêtre selon l'une quelconque des revendications précédentes, sachant que le second CTE est inférieur à environ 35 × 10⁻⁷/°C et supérieur à zéro.

6. Fenêtre selon l'une quelconque des revendications précédentes, sachant que le second matériau transparent ou translucide est un verre de boro-aluminosilicate.

7. Fenêtre selon l'une quelconque des revendications précédentes, sachant que le second matériau transparent ou translucide est un verre de boro-aluminosilicate alcalino-terreux ou un verre de boro-aluminosilicate sans alcali.

8. Fenêtre selon l'une quelconque des revendications précédentes, sachant que la seconde épaisseur est dans la gamme d'environ 0,85 à environ 0,4 mm.

9. Fenêtre selon l'une quelconque des revendications précédentes, sachant que le premier module d'élasticité est dans la gamme d'environ 300 à environ 1000 MPa lorsqu'il est mesuré à une vitesse d'allongement de 10 mm par minute et à 30 °C.

10. Fenêtre selon l'une quelconque des revendications précédentes, sachant que le premier module d'élasticité est dans la gamme d'environ 400 à environ 600 MPa lorsqu'il est mesuré à une vitesse d'allongement de 10 mm par minute et à 30 °C.

11. Fenêtre selon l'une quelconque des revendications précédentes, sachant que le deuxième module d'élasticité est inférieur à un trentième du premier module d'élasticité lorsqu'il est mesuré à une vitesse d'allongement de 10 mm par minute et à 30 °C.

12. Fenêtre selon l'une quelconque des revendications précédentes, sachant que le deuxième module d'élasticité est inférieur à un quarantième du premier module d'élasticité lorsqu'il est mesuré à une vitesse d'allongement de 10 mm par minute et à 30 °C.

13. Fenêtre selon l'une quelconque des revendications précédentes, sachant que le deuxième module d'élasticité est inférieur à environ un centième du premier module d'élasticité lorsqu'il est mesuré à une vitesse d'allongement de 10 mm par minute et à 30 °C.

14. Fenêtre selon l'une quelconque des revendications précédentes, sachant que la couche intermédiaire polymère (40) comprend en outre une troisième couche polymère (43) du premier matériau polymère.

15. Fenêtre selon l'une quelconque des revendications précédentes, sachant que la première couche intermédiaire polymère (40) est du SentryGlas^{®} et que la deuxième couche intermédiaire polymère (40) est un uréthane thermoplastique.
